# EUROPEAN PATENT APPLICATION

(11) **EP 4 679 218 A1**
(43) Date of publication of application: **14.01.2026**
(21) Application number: 24188128.3
(22) Date of filing: 11.07.2024
(51) Int. Cl.: G05D 1/242, G01S 17/00, G05D 1/622, G05D 1/672, G05D 105/20, G05D 107/80, G05D 109/10, G05D 111/10, G08G 5/06

(54) **METHOD AND SENSOR SYSTEM FOR DETECTING OBJECTS**

(71) Applicant: Evitado Technologies GmbH, 21079 Hamburg (DE)
(72) Inventor: Kasinec, Alexander Thomas, Broadview Heights, 1330 (US); Moakes, Andrew Charles, 22087 Hamburg (DE)
(74) Representative: WBH Wachenhausen Patentanwälte PartG mbB

(57) **Abstract**

A method comprising the steps of: providing (S1) a surroundings detection sensor on a tug, which is configured for manoeuvring a mobile object, continuously detecting (S2) a region of an outer surface of the mobile object with the surroundings detection sensor, continuously determining (S3) a position of a tug-bound system relative to the mobile object based on a predetermined geometric model of an outer surface of the mobile object and the detected region of the outer surface, wherein the steps of detecting (S2) and determining (S3) are performed when the mobile object is manoeuvred by the tug, and detecting (S4) objects in the surroundings of the mobile object with the surroundings detection sensor based on the step of continuously determining (S3) the position of the tug-bound system. Further a sensor system for detecting objects in the surroundings of the sensor system and for providing on a tug.

## Description

### Technical field

The invention relates to a method and a sensor system for detecting objects.

### Prior art

It is known practice to operate a vehicle on the basis of measurement data from a surroundings detection sensor. A surroundings detection sensor such as this may be an integrated component of the vehicle, which is permanently installed on the vehicle.

### Description of the invention

An aspect relates to a method for detecting objects. The method may be performed for detecting objects in the surroundings of a surroundings detection sensor or a sensor system. The method may be performed for detecting objects in the surroundings of a mobile object. The method may be performed by the sensor system according to the subsequent aspect.

The method comprises the step of providing a surroundings detection sensor on a tug, which is configured for manoeuvring a mobile object. The tug may comprise a towbar for connecting the mobile object to the tug. Alternatively, the tug may comprise a retainer for attaching the mobile object to the tug. The tug may be a vehicle or a tractor, which is configured for being connected to the mobile object and for moving, for example pushing or pulling, the mobile object. The tug may be a pusher for pushing the mobile object and/or a puller for pulling the mobile object. The tug may be for example an aircraft tug or a harbour tug.

The step of providing the surroundings detection sensor may be or may comprise temporarily mounting the surroundings detection sensor on the tug. The method may thus be performed with the surroundings detection sensor or the sensor system being temporarily mounted or installed on the tug. Alternatively, the step of providing the surroundings detection sensor may be or may comprise permanently mounting of the surroundings detection sensor on the tug. The method may thus also be performed with the surroundings detection sensor or the sensor system being permanently mounted or installed on the tug. Alternatively or additionally, the step of providing the surroundings detection sensor may be or may comprise any intermediate mounting between the temporary mounting and the permanent mounting, for example any kind of semi-temporarily mounting or semi-permanently mounting.

The temporarily mounting or permanently mounting may be performed manually by an operator. Alternatively, the mounting may also be performed in an at least semiautomated manner, for example by a robot. During the mounting, the tug may be in a resting position, for example in a parking position or a maintenance position. The mounting may be a detachably mounting in a mounting region on an outer surface of the tug. The mounting region may be a region on the outer surface of the tug, which may be arbitrarily or selectively chosen by the operator.

The method comprises the further step of continuously detecting a region of an outer surface of the mobile object with the surroundings detection sensor mounted on the tug. The region of the outer surface may be an areal region of the outer surface or a tree-dimensional region of the outer surface. The continuously detecting may be a successively detecting. The detecting may be controlled, for example remotely by using a mobile terminal, by the operator. Alternatively, the detecting may be performed in an at least semiautomated manner. The mobile object may be in motion during the detecting. According to an embodiment, the continuously detecting is a three-dimensional detecting of the region of the outer surface of the mobile object. The step of continuously detecting may thus be performed by a three-dimensional detection sensor.

The method comprises the further step of continuously determining a position of a tug-bound system relative to the mobile object based on a predetermined geometric model of the outer surface of the mobile object and the detected region of the outer surface. The continuously determining may be a successively determining. The tug-bound system may be a system, which is bound to the tug. The tug-bound system may be mounted, for example temporarily mounted or permanently mounted, on the tug. The determining may be performed by the position determination device. The determining may be controlled, for example remotely by using the mobile terminal, by the operator. Alternatively, the detecting may be performed in an at least semiautomated manner. The mobile object may be in in motion during the determining.

The position of the tug-bound system relative to the mobile object may be a relative position of the tug-bound system with respect to the mobile object. The position of the tug-bound system may be or comprise a location or a position vector of the tug-bound system. The position of the tug-bound system relative to the mobile object may thus be a relative location of the tug-bound system with respect to the mobile object. The position of the tug-bound system may be or comprise an orientation of the tug-bound system. The position of the tug-bound system relative to the mobile object may thus be a relative orientation of the tug-bound system with respect to the mobile object. The position of the tug-bound system relative to the mobile object may also be a relative attitude or a relative pose of the tug-bound system with respect to the mobile object.

The steps of detecting and determining are performed when the mobile object is manoeuvred by the tug. The mobile object may be connected or attached to the tug during manoeuvring of the mobile object by the tug. The steps of detecting and determining may be performed when the mobile object is moved by the tug. The method comprises the further step of detecting objects in the surroundings of the mobile object with the surroundings detection sensor based on the step of continuously determining the position of the tug-bound system.

The tug-bound system may be a sensor detection system or a sensor coordinate system of the surroundings detection sensor, wherein the surroundings detection sensor may be temporarily bound or permanently bound to the tug. According to a further embodiment, in the step of continuously determining the position of the tug-bound system, a position of the surroundings detection sensor is continuously determined relative to the mobile object based on the predetermined geometric model of the outer surface and the region of the outer surface. The position of the surroundings detection sensor may be a position of the sensor detection system or the sensor coordinate system.

The tug-bound system may be a component system or a component axis of a component of the mobile object, wherein the component may be temporarily bound to the tug. The component may be a movable component. According to a further embodiment, in the step of continuously determining the position of the tug-bound system, a position of a movable component of the mobile object, which is bound to the tug when the mobile object is manoeuvred by the tug, is continuously determined relative to the mobile object based on the predetermined geometric model of the outer surface and the region of the outer surface. The position of the movable component may be a position of the component system or the component axis.

According to a further embodiment, the method comprises the further step of controlling the tug for compensating for a movement of the movable component relative to the mobile object based on the detected position of the movable component when the mobile object is manoeuvred by the tug. Alternatively or additionally to the step of controlling, the method may comprise the further step of outputting a warning signal for warning an operator of the tug of a predefined critical movement of the movable component based on the detected position of the movable component when the mobile object is manoeuvred by the tug. The further steps of controlling or outputting may be performed continuously.

The movable component may be a rotatable component. The movement of the movable component may be a rotation of the movable component relative to the mobile object. The method may thus comprise the further step of controlling the tug for compensating for a rotation of the movable component relative to the mobile object based on a detected orientation of the movable component with respect to the mobile object when the mobile object is manoeuvred by the tug. The tug may comprise a steering device for steering the tug. According to an embodiment, the position of the movable component may be a steering angle of the steering device. The controlling may be or may comprise a controlling of the steering device for compensating for the rotation of the movable component or the steering angle. Alternatively or additionally, to the steering device, the tug may comprise a rotation device for rotating the movable component relative to the tug for compensating for the rotation of the movable component or a steering angle change. The step of controlling may be performed for providing a constant orientation of the movable component with respect to the mobile object. The step of controlling may be performed for providing a constant steering angle, for example a neutral steering angle, of the steering device with respect to the mobile object.

According to a further embodiment, the mobile object is a transportation means for transporting people or goods. The mobile object may for example be an aircraft. The temporary mounting or permanently mounting of the surroundings detection sensor may comprise temporary mounting or permanently mounting on an aircraft tug. The continuously detecting of the region of the outer surface of the mobile object may comprise a continuously detecting of a fuselage of the aircraft. The movable component may be a nose landing gear of the aircraft. At least the step of detecting objects may be performed during movement of the means for transporting people or goods over the ground. The steps of detecting and determining may be performed during movement of the transportation means over the ground, for example during rolling or reversing of the aircraft on a runway, an apron or a taxiway of an airport. If the means for transporting people or goods is an aircraft, at least the step of detecting objects may be performed during towing, taxiing or a pushback of the aircraft on the ground by the tug. The ground may be a runway, an apron or a taxiway of an airport. The method may thus be performed during a towing process, a taxiing process or the pushback. If the method is performed in such a way, it may serve as a traffic monitoring system for monitoring potential collisions in the rolling traffic.

The method may be performed in an indoor environment and/or in an outdoor environment. The method may also be performed during movement of the mobile object in a building, for example a production shed or a hangar. If the method is employed during such movement, it may serve as a production safety system or as a parking system for monitoring collisions in the production shed or the hangar.

According to a further embodiment, the method comprises the further step of identifying whether an object detected in the surroundings of the mobile object is a potential collision object. The identifying may also be performed by a collision monitoring device. The identifying may comprise calculating a risk of collision based on the object identified as potential collision object. The calculating of the risk of collision may be based on a relative change of position between the mobile object and the object identified as a potential collision object. The risk of collision may be calculated based on a distance or a change of distance between the mobile object and the object identified as a potential collision object. Accordingly, the method may also be performed to monitor the surroundings of the mobile object for potential collision objects that may potentially collide with the mobile object.

According to a further embodiment, the method comprises the further step of controlling the driving dynamics of the tug based on the step of detecting objects in the surroundings of the mobile object. The driving dynamics may be longitudinal driving dynamics or transverse driving dynamics of the tug. In the step of controlling, the movement speed or driving speed of the tug may be controlled, for example lowered based on a detected object in the surroundings of the mobile object. Alternatively oder additionally, in the step of controlling, the movement speed or driving speed of the tug may be controlled, for example lowered based on the state of the mobile object being attached or bound to the tug.

According to a further embodiment, the method comprises the further step of displaying the objects detected in the surroundings of the mobile object on the sensor system or a mobile terminal. The displaying may be a displaying in near real time. The method may therefore comprise a monitoring of the objects detected in the surroundings of the mobile object by the sensor system. The monitoring may be conducted by an operator. Alternatively, the monitoring may be performed in an at least semiautomated manner. As a further step, the method may comprise displaying the potential collision object on the mobile terminal.

According to a further embodiment of the method, the step of detecting comprises filtering of objects in the surroundings of the mobile object that are detected by the surroundings detection sensor. The filtering may be performed based on a two-dimensional or three-dimensional mapping. The filtering may furthermore be performed in a voxel-based or box-shaped manner, wherein the mapping may be a voxel mapping. The voxel mapping may be performed by the surroundings detection sensor to preprocess the measurement data of the surroundings detection sensor. The filtering may comprise filtering of the measurement data or of the raw data from the surroundings detection sensor using an appropriate filter. The filter may be a data reduction filter, for example a voxel filter or box filter.

A further aspect relates to a sensor system for detecting objects in the surroundings of the sensor system and for providing, for example temporary mounting or permanently mounting, on a tug, which is configured for manoeuvring a mobile object. The sensor system may be a portable sensor system. The sensor system may thus be a surroundings detection system or an object detection system. The sensor system may be a mobile sensor system, the tug may form a supporting platform for the sensor system. The sensor system may be a transportable sensor system, the sensor system may be carried by hand and mounted on the tug by hand. The sensor system may thus be easily handled and mounted on the tug by an operator. The operator may be a human being or a machine, for example a robot. The sensor system may be handled and mounted on the tug by a single operator.

The sensor system may be a sensor system, which is permanently installed on the tug. The sensor system may thus be a pre-installed or permanent tug component. The sensor system may be sensor system, which is permanently mountable on a tug prior to putting the tug inro operation. Alternatively to a permanent installation, the sensor system may be a sensor system, which is temporarily installed on the tug. The sensor system may thus be an add-on sensor system, which can be a portable sensor system. The sensor system may be installable on different tugs. The sensor system may be retro-fits sensor system, which is permanently mountable on a tug after putting the tug inro operation.

The objects may be any object in the surroundings of the sensor system. The objects may comprise at least one stationary object and/or at least one mobile object in the surroundings of the sensor system, the tug or the mobile object. The stationary object that may be detected by the sensor system may be a stationary infrastructure object, for example a building. The mobile object that may be detected by the sensor system may be a vehicle, for example an aircraft or a machine. The aircraft may be an airplane. The mobile object may also be an object transported by a vehicle, for example a container. The mobile object may be a living being, for example a human being. The mobile object may be a movable object that may be moving or at rest.

According to an embodiment, the sensor system is not a permanent or integral part of the tug. According to this embodiment, the sensor system is not integrated in the tug or permanently installed on the tug. The temporary mounting on the mobile object may thus comprise a transitory, non-permanent, mounting on the mobile object. The sensor system may thus be in the form of a temporary add-on system. The sensor system may be mounted on the tug, wherein the sensor system is placed on the tug transitorily. The sensor system may be removed from the tug again, wherein the sensor system may be a detachable sensor system. The tug may be operated without the mounted sensor system. The mobile sensor system may provide object-based surroundings information for operation of the mobile object.

The sensor system comprises a surroundings detection sensor for detecting the objects. The surroundings detection sensor may comprise a distance-measuring sensor. Alternatively or additionally, the surroundings detection sensor may comprise an image-capturing sensor, for example a camera. The surroundings detection sensor may therefore also be a distance-measuring and/or image-capturing sensor. The distance-measuring sensor may be in the form of a scanning sensor. The distance-measuring sensor may be for example a laser scanner, a radar measuring device or an ultrasonic measuring device. The laser scanner, the radar measuring device or the ultrasonic measuring device may be in the form of a two-dimensional or three-dimensional scanning sensor. The laser scanner may thus for example be a three-dimensional laser scanner. The distance-measuring sensor may furthermore be an omnidirectional detecting sensor, which for example measures in a 360° detection region.

The outer surface of the mobile object or the objects in the surroundings of the mobile object may be detected or scanned, at discrete points. The surroundings detection sensor may detect a point cloud containing measurement points on the outer surface of the mobile object or on the objects in the surroundings of the mobile object. The point cloud may be a two-dimensional or three-dimensional point cloud. The point cloud may comprise two-dimensional or three-dimensional coordinates of measurement points on the outer surface of the mobile object or on the objects in the surroundings of the mobile object. The point cloud may further comprise measurement intensities relating to the measurement points, wherein the intensities may define a quantitative value of the received measurement beam energy in comparison with the transmitted measurement beam energy. As an alternative or in addition to the intensities, the point cloud may furthermore comprise image-based information, for example RGB information. For this, the surroundings detection sensor may comprise the image-capturing sensor.

The sensor system further comprises a mounting apparatus, connected to the surroundings detection sensor, for temporary mounting or permanent mounting the sensor system on the tug. The mounting apparatus may be a mechanical mounting apparatus. The mounting apparatus may be configured for temporary mounting or permanent mounting of the sensor system at any position on a mounting region of the outer surface of the tug. The mounting apparatus may be a non-electrically operable or an electrically operable mounting apparatus. At least regions of the mounting apparatus may be operatively connected, for example operatively connected based on a vacuum, to the outer surface in order to mount the surroundings detection sensor on the outer surface. Alternatively or additionally, at least regions of the mounting apparatus may be engaged with the outer surface in order to mount the surroundings detection sensor on the outer surface. The mounting apparatus may be engaged with the outer surface using a snap-fit connection. The outer surface itself may be in a form without mounting aids or without means for mounting the sensor system on the outer surface. The outer surface may be a planar or curved surface that may be in a form without recesses or depressions.

The sensor system comprises a position determination device for continuously determining a position of a tug-bound system when the tug is in a state in which the mobile object is attached to the tug and the surroundings detection sensor is in a state in which it is temporarily mounted or permanently mounted on the tug. The position of the tug-bound system may be determined in an object coordinate system of the mobile object. The position may comprise a relative location and/or a relative orientation of the surroundings detection sensor in relation to the mobile object. The position may also comprise a location and/or an orientation of the surroundings detection sensor in the object coordinate system.

The mounting apparatus may be operated by an operator. The mounting apparatus may be in an initial state or in a state in which it is not mounted on the tug. The operator may put the mounting apparatus into a state in which it is mounted on the tug, the operator being able to arrange the mounting apparatus on the tug and bring about the mounted state with at least one from pushing the mounting apparatus onto the tug, latching the mounting apparatus in the tug, plugging the mounting apparatus into the tug and clamping the mounting apparatus on the tug. When the mounting apparatus is in the mounted state, the surroundings detection sensor may be permanently arranged on the tug with the mounting apparatus.

The position determination device is configured to continuously determine the position of the tug-bound system relative to the mobile object based on a predetermined geometric model of an outer surface of the mobile object and a region of the outer surface that is continuously detected by the surroundings detection sensor for tracking the mobile object. The predetermined geometric model of the outer surface may comprise at least one geometric parameter of the outer surface. The predetermined geometric model may be based on a predefined CAD model of at least one region of the mobile object. Alternatively or additionally, the predetermined geometric model may also comprise at least one point on the outer surface or a point cloud on the outer surface. The region of the outer surface that is detected by the surroundings detection sensor may also comprise at least one geometric parameter of the outer surface. Alternatively or additionally, the region of the outer surface that is detected by the surroundings detection sensor may also comprise at least one point on the detected region of the outer surface or a point cloud on the detected region of the outer surface. The geometric parameter may be a surface vector, for example a normal vector, an object axis or a curvature parameter. The geometric model may be the geometric model of an outer surface or outer contour, of an aircraft, for example.

The sensor system may be transitorily mounted on the tug to serve as a surroundings detection system during manoeuvring of the mobile object. After the sensor system has been mounted on the tug, position calibration for surroundings detection may then take place based on the geometry of the mobile object and relative thereto. The sensor system may be operable in an indoor environment and/or in an outdoor environment. The sensor system may thus also be an indoor and/or outdoor sensor system. This is facilitated by virtue of the sensor system being operable independently of a satellite positioning method, for example based on GNSS.

The tug-bound system may be a sensor detection system or a sensor coordinate system of the sensor system or the surroundings detection sensor, wherein the sensor system may be temporarily bound or permanently bound to the tug. According to an embodiment, the position of the tug-bound system comprises a position of the surroundings detection sensor, wherein the position determination device is configured to continuously determine the position of the surroundings detection sensor relative to the mobile object based on the predetermined geometric model of the outer surface and the region of the outer surface. The position of the surroundings detection sensor may be a position of the sensor detection system or the sensor coordinate system.

The tug-bound system may be a component system or a component axis of a component of the mobile object, wherein the component may be temporarily bound to the tug. The component may be the movable component. According to a further embodiment, the position of the tug-bound system comprises a position of a movable component of the mobile object, which is bound to the tug in the state in which the mobile object is attached to the tug. The position determination device may be configured to continuously determine the position of the movable component relative to the mobile object based on the predetermined geometric model of the outer surface and the region of the outer surface. The position of the movable component may be a position of the component system or the component axis.

According to a further embodiment, the position determination device is configured to determine the position of the tug-bound system in the object coordinate system that may be referenced to the mobile object. The position of the tug-bound system may comprise at least one from a sensor location and a sensor orientation of the surroundings detection sensor in the object coordinate system. The position of the tug-bound system may thus comprise at least one from a relative position and a relative orientation of the surroundings detection sensor referenced to the mobile object. One of the described orientations may be or comprise an alignment. The object coordinate system may furthermore be a coordinate system of the mobile object, for example may be a vehicle coordinate system, for example of an aircraft. The object coordinate system may also be a model coordinate system of the geometric model of the outer surface.

According to a further embodiment, the position determination device is configured to determine the position of the tug-bound system based on a geometric correlation between the detected region of the outer surface and the predetermined geometric model of the outer surface. The position determination may be configured to determine the position of the tug-bound system based on an ICP algorithm relating to the geometric correlation between the detected region of the outer surface and the predetermined geometric model of the outer surface. The geometric correlation may comprise geometric matching of the detected region of the outer surface to the predetermined geometric model of the outer surface. The correlation or the matching, may be applicable point-based and/or feature-based matching.

The point-based matching may be based on at least one point cloud. The point-based matching may be based on a point cloud detected by the surroundings detection sensor on the outer surface, which may be a sensor point cloud. As an alternative or in addition to the detected point cloud, the point-based matching may be based on a point cloud that is derived from the geometric model of the outer surface, which may be a reference point cloud or a model point cloud. The point-based matching may therefore be based on a correlation or a comparison, of the point cloud detected by the surroundings detection sensor and the point cloud derived from the geometric model of the outer surface. The point-cloud-based matching may be performed based on an ICP algorithm, the two point clouds taken into consideration for a correlation or for a point cloud comparison, being able to form input variables for the ICP algorithm. Transformation parameters from a sensor coordinate system to an object coordinate system or to a model coordinate system, may further be output variables of the ICP algorithm.

The feature-based matching may be based on at least one geometric feature derived from at least one of the described point clouds. As an alternative or in addition to the point-based correlation, the feature-based matching may also comprise a feature-based correlation. The geometric feature may be derived based on a best-fit method, for example, a multiplicity of points in the point cloud being able to be defined by a geometrically adapted geometric body, surface and/or axis. For example, the body, the surface and/or the axis may be based on a body, surface and/or axis that is adapted to fit the multiplicity of points in the point cloud by means of adjustment calculation, for example based on a least squares method. The feature-based correlation may thus for example be based on a correlation of applicable bodies, surfaces and/or axes that are derivable from at least one of the described point clouds.

The geometric correlation may comprise a comparison or an overlaying, of the detected region of the outer surface with the predetermined geometric model of the outer surface. The position determination device may therefore be advantageously configured to determine the position of the tug-bound system locally or in a model-based manner, even if the mobile object with the surroundings detection sensor mounted thereon moves in a global coordinate system.

The position determination device may be configured to determine the position of the tug-bound system based on a transformation between the detected region of the outer surface and the predetermined geometric model of the outer surface. The transformation may be a geometric transformation or a coordinate transformation. The position determination device may be configured to determine transformation parameters for the transformation between the detected region of the outer surface and the predetermined geometric model of the outer surface. The transformation parameters may comprise at least one from at least one translation parameter, at least one rotation parameter and at least one scale factor. The transformation parameters may be transformation parameters of a 6-parameter transformation, for example, the transformation parameters being able to comprise three translation parameters and three rotation parameters. The position determination device may be configured to determine the transformation parameters for a Cartesian sensor coordinate system and a Cartesian model coordinate system of the geometric model. The position determination device may therefore be advantageously configured to determine the position of the tug-bound system in a local sensor coordinate system and a local model coordinate system independently of a global coordinate system.

According to a further embodiment, the mobile object is a transportation means for transporting people or goods, for example an aircraft, wherein the tug is configured for manoeuvring the transportation means, for example an aircraft tug, wherein the movable component is a steering device of the transportation means, for example a landing gear of the aircraft. The means for transporting people or goods may be a vehicle or a machine. In another example, the means for transporting people or goods may be a vehicle for freight transport or heavy transport. The means for transporting people or goods may also comprise a transport apparatus for transporting people or goods, wherein the transport apparatus is movable by the vehicle or the machine. The transport apparatus may be a container. The means for transporting people or goods may furthermore comprise at least one transported person and/or a transported good, the person or the good is movable by the vehicle or the machine. The transported good may be a vehicle.

According to a further embodiment, the surroundings detection sensor comprises or is a laser scanner for detecting objects in the surroundings of the sensor system in a planar manner. The laser scanner may comprise a three-dimensional detection region. A housing of the laser scanner may thus be connected to the mounting apparatus rigidly or in an articulated manner. This allows the sensor system to be in more compact and lower-maintenance form.

According to a further embodiment, the sensor system comprises at least one further surroundings detection sensor for detecting the objects. The further surroundings detection sensor may be in the same form as the described surroundings detection sensor, wherein the further surroundings detection sensor may comprise or may be a laser scanner. The surroundings detection sensors may advantageously comprise a combined detection region, which may be larger than the individual detection regions of the surroundings detection sensors. The mounting apparatus may also be connected to the further surroundings detection sensor for the purpose of temporarily mounting or permanently mounting the sensor system on the tug.

According to a further embodiment, the mounting apparatus is configured for toolless mounting of the sensor system on the tug. Toolless mounting comprises or is mounting of the sensor system on the tug without the use of tools. The mounting apparatus may furthermore be configured for directly mounting of the sensor system on the tug. An operator may thus mount the sensor system on the tug in a particularly efficient manner directly and without the use of tools or an adapter.

According to a further embodiment, the mounting apparatus comprises at least one handle for manual mounting of the sensor system on the tug. The handle may be permanently connected to or mounted on, the mounting apparatus or the sensor system. Alternatively, the handle may be temporarily mountable on the mounting apparatus or on the sensor system, for manual mounting, and may be removable from the mounting apparatus. The handle allows the sensor system to be handled by an operator advantageously ergonomically and intuitively during mounting.

The mounting apparatus may comprise a device for pressure-based mounting of the sensor system on the tug. The pressure-based mounting may be vacuum-based or underpressure-based mounting. The mounting apparatus may comprise at least one suction cup for suction-force-based mounting of the sensor system on the tug. The suction cup may be in contact with the tug and may be pushed against the latter. The mounting apparatus may thus be configured for pressure-based or suction-force-based, attachment or arrangement on the tug. The sensor system may thus be mounted on the tug, advantageously in a residue-free manner.

Alternatively or additionally to the pressure-based mounting, the mounting apparatus may comprise a device for magnetic mounting of the sensor system on the tug. The magnetic mounting may be a temporarily magnet mounting or a permanently magnetic mounting. The magnetic mounting may be a permanent-magnetic mounting. The mounting apparatus may comprise at least one magnet for magnetic mounting of the sensor system on the tug. The magnet may be a permanent magnet. The magnet may be in contact with the tug and may be fixed on the latter. The mounting apparatus may thus be configured for magnetic attachment on the tug. The sensor system may thus be mounted on the tug advantageously in a further residue-free manner.

The surroundings detection sensor may be rigidly connected to the mounting apparatus. The surroundings detection sensor may be connected to the mounting apparatus via a rigid frame on which the surroundings detection sensor and the mounting apparatus may be mounted. The frame may be a lightweight frame, which may allow a portability of the sensor system to be ensured. Furthermore, a rigid connection of the surroundings detection sensor to the mounting apparatus may allow the sensor system to be robust in the face of interfering influences that may influence the relative position of the surroundings detection sensor in relation to the mounting apparatus or in relation to the tug on which the surroundings detection sensor may thus be rigidly mounted. Surroundings detection may thus advantageously be performed more precisely.

The surroundings detection sensor may be connected to the mounting apparatus in an articulated manner. The surroundings detection sensor may be articulated to the mounting apparatus by at least one articulation. The surroundings detection sensor may be arranged on the mounting apparatus so as to be pivotable or rotatable. The surroundings detection sensor may be lockable or may be arranged so as to be pivotable or rotatable in such a way that it may pivot or may rotate during detection of the surroundings. The detection region of the surroundings detection sensor or of the surroundings detection sensors may thus be optimized further.

According to a further embodiment, the sensor system may be autonomous. The sensor system may be energy-autonomous, wherein the sensor system may comprise an autonomous power supply, for example a battery. The sensor system may therefore also be a battery-operated sensor system.

According to a further embodiment, the position determination device is configured to determine the position of the tug-bound system autonomously. The position determination device may determine the position of the tug-bound system independently of further detection sensors. The position of the surroundings detection sensor does not need to be detected by a position detection sensor, wherein the mobile object may not have to be tracked by such a sensor. The orientation of the surroundings detection sensor may not need to be detected by an orientation detection sensor. The position determination device may therefore be configured to determine the position of the tug-bound system exclusively based on the measurement data from the surroundings detection sensor.

According to a further embodiment, the sensor system comprises a collision monitoring device for monitoring objects situated in the surroundings of the sensor system. The collision monitoring device may be configured to identify whether an object monitored in the surroundings is a potential collision object. The monitoring may be based on voxel mapping for collision monitoring. The objects situated in the surroundings of the sensor system may be moving objects or objects at rest. The monitoring may comprise detecting, locating and/or identifying the objects situated in the surroundings of the sensor system. The monitoring may furthermore comprise blind spot monitoring in a predetermined monitoring region. The predetermined monitoring region may comprise a subregion of the monitoring region or at least one subregion of a measurement region of the surroundings detection sensor. The collision monitoring unit may be part of the computing and control device. The collision monitoring device may be configured to identify whether an object monitored in the surroundings is a potential collision object. The potential collision object may be a static or dynamic object or an object at rest or a moving object. A potential collision object may be another mobile object or a building.

The monitored object may be a detected object. The collision monitoring device may be configured to classify detected or monitored, objects into potential collision objects and non-potential collision objects. The collision monitoring device may be configured to take a distance between the mobile object and the detected or monitored, object as a basis for identifying or classifying the latter accordingly. As an alternative or in addition to the distance, a detected geometry or direction of movement of the detected or monitored, object may also be used for this. An object approaching the mobile object may thus be classified as a potential collision object, for example. The objects situated in the surroundings of the sensor system may be tracked by the surroundings detection sensor for this purpose. Furthermore, the collision monitoring device may be configured to take a threshold value, for example a distance-dependent threshold value relating to the distance between the mobile object and a detected or monitored, object, as a basis for identifying or classifying this object accordingly. The sensor system may thus advantageously be a sensor-based collision monitoring system or collision avoidance system.

According to a further embodiment, the collision monitoring device may be configured to control the driving dynamics of the tug based on an identified potential collision object. The driving dynamics may be longitudinal driving dynamics or transverse dynamics of the tug. The sensor system may comprise a manoeuvring device for manoeuvring the tug. The manoeuvering device may be connected to the collision monitoring device and may have a manoeuvering instruction based on objects that are situated in the surroundings of the sensor system and monitored. The manoeuvering instruction may be an instruction to move the tug for avoiding a collision with an object. The instruction may be displayed on the mobile device. Alternatively, the instruction may also be displayed on a control device for controlling the movement of the tug or may be transmitted from the control device to a device for moving the tug to control a movement of the tug. The sensor system may thus also be a manoeuvering system for manoeuvering the tug.

Alternatively or additionally to the preceding embodiment, the sensor system may comprise a manoeuvering device or parking device, for manoeuvering or parking, the mobile object. The manoeuvering device or the parking device, may be connected to the collision monitoring device and may have a manoeuvering instruction or a parking instruction based on objects that are situated in the surroundings of the sensor system and monitored. The manoeuvering instruction or the parking instruction may be an instruction to move the mobile object, which instruction allows a collision with the detected or monitored objects to be avoided. The instruction may be displayed on the mobile device. Alternatively, the instruction may also be displayed on a control device for controlling the movement of the mobile object or may be transmitted from the control device to a device for moving the mobile object to control a movement of the mobile object. The sensor system may thus also be a parking system for parking the mobile object or as a manoeuvering system for manoeuvering the mobile object.

According to a further embodiment, the position determination device is part of a computing and control device for evaluating measurement data from the surroundings detection sensor and for actuating the surroundings detection sensor. The computing and control device may be a control device for controlling the tug. The position determination device or the computing and control device, may be configured to calculate the described transformation parameters. The computing and control device may be connected to the surroundings detection sensor by wire or wirelessly or on a radio basis. The computing and control device may be arranged on the frame of the sensor system. The sensor system may thus advantageously form a compact sensor system having an integrated computing and control device. The sensor system may therefore be a stand-alone system.

According to a further embodiment, the sensor system comprises a mobile terminal that comprises the position determination device. The mobile terminal may comprise a processor, the mobile terminal may be a tablet PC. The mobile terminal may comprise the computing and control device. Parts of the computing and control device may also be arranged on the sensor system and on the mobile terminal in a distributed manner.

According to a further embodiment, the sensor system comprises a mobile terminal that is configured to wirelessly communicate with the surroundings detection sensor to control the surroundings detection sensor remotely. The mobile terminal may comprise a GUI display for applicable interoperability with an operator. The mobile terminal may be the mobile terminal described in relation to the preceding embodiment. The sensor system or the computing and control device, may comprise a control device to control the surroundings detection sensor. The mobile terminal may comprise the control device to control the surroundings detection sensor remotely. The sensor system may therefore comprise a remote control that may be used to actuate the surroundings detection sensor at a distance therefrom and wirelessly. The remote controlling may also comprise remote monitoring according to the monitoring described.

According to a further embodiment, the mobile terminal is configured to display objects detected in the surroundings of the sensor system by the sensor system. The mobile terminal may be one of the mobile terminals described in relation to the preceding embodiments. The mobile terminal may be configured to display raw data or measurement data, from the surroundings detection sensor. The computing and control device or the mobile terminal, may be configured to process the measurement data captured by the surroundings detection sensor further. Measurement data that are processed further may be pre-processed measurement data, filtered measurement data, abstracted measurement data and/or classified measurement data. An abstraction of the measurement data or a classification of the measurement data, may relate to the detected objects. The filtered measurement data may comprise box data of the objects, wherein objects may be displayed as boxes.

The mobile terminal may be configured to display the geometric model of the outer surface of the mobile object. The mobile terminal may therefore be configured to display the objects detected in the surroundings of the sensor system by the sensor system, and the geometric model. The mobile terminal may thus also be configured to display the detected objects relative to the geometric model. The mobile terminal may be configured to display the detected objects in the described object coordinate system or model coordinate system. An operator may therefore advantageously compare the relative position of detected objects in relation to the mobile object in near real time when operating the mobile terminal.

According to a further embodiment, the position determination device comprises a data interface to a logistics information system for the purpose of providing information on objects detected, tracked or monitored by the sensor system for the logistics information system. Position information, positions and/or tracked trajectories of objects monitored or tracked, by the sensor system may be provided to the logistics information system via the data interface. Such information relating to the detected or monitored objects may thus be provided to the logistics information system in near real time. The data interface may also be configured to provide metadata relating to the detected or monitored objects. The metadata may comprise at least one from the distance described in relation to collision monitoring, the detected geometry and the direction of movement.

The logistics information system may be configured to detect or determine the current position of the mobile object in a logistics system coordinate system. Based thereon, the logistics information system may be configured to transform the detected, tracked or monitored objects or the position or orientation thereof, from the object coordinate system to the logistics coordinate system. As such, the objects detected locally and relative to the mobile object may be transformed to a superordinate system, for example the logistics system coordinate system.

Embodiments and features described in relation to an aspect may be embodiments and features mutatis mutandis to another aspect. Method steps may be performed by the sensor system, wherein the latter may comprise a device for performing at least one of the method steps. Features of the sensor system may be performed by the method or vice versa.

A further aspect relates to a tug, for example an aircraft tug, wherein the tug comprises the sensor system according to the previous aspect, which is configured to detect objects in the surroundings of the sensor system. The sensor system may be provided, mounted or installed on the tug as described to the previous aspects.

### Brief description of the figures

- Figure 1: shows a tug and a sensor system according to embodiments.
- Figure 2: shows a sensor system according to a further embodiment.
- Figure 3: shows the tug of figure 1 having a sensor system mounted on the tug.
- Figure 4: shows a mobile object manoeuvred by the tug of figure 3.
- Figure 5: shows a flowchart for method steps of a method for detecting objects in the surroundings of a mobile object according to an embodiment.

### Detailed description of embodiments

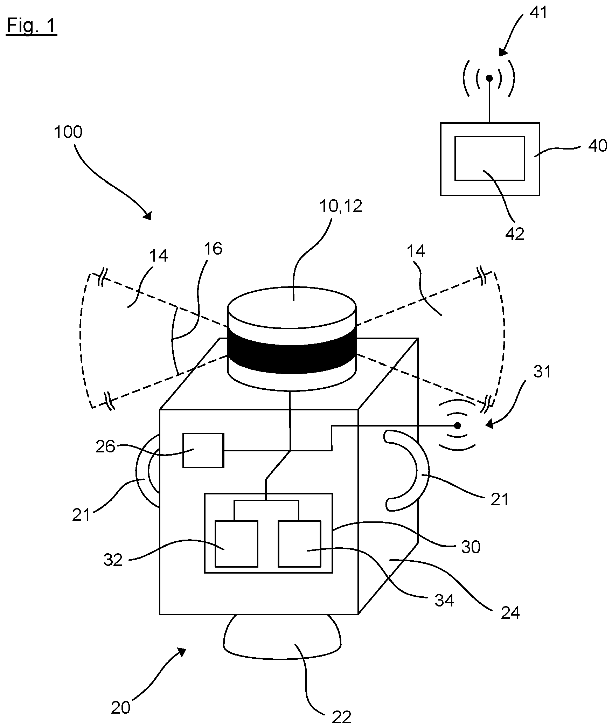

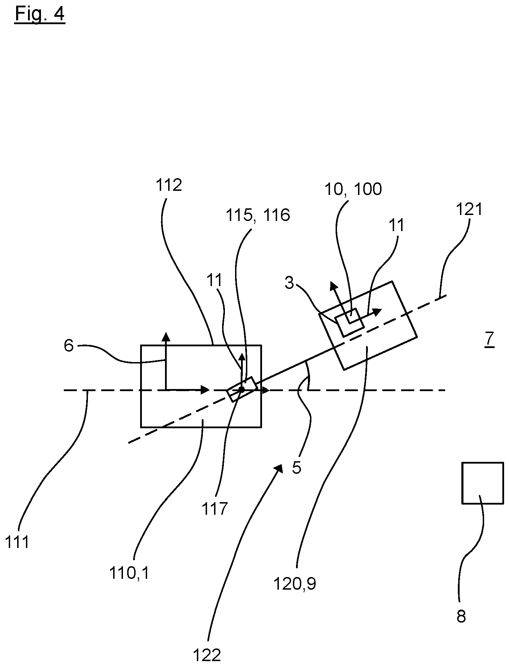

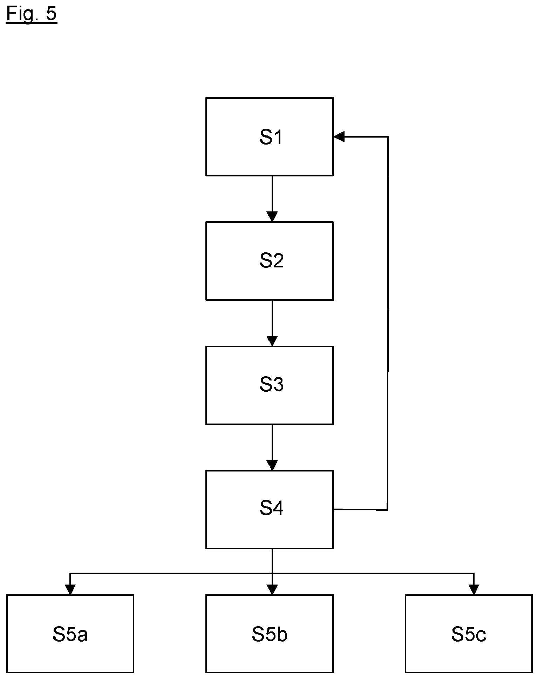

The sensor system 100 shown in figure 1 comprises a surroundings detection sensor 10 and a mounting apparatus 20 for manual mounting the sensor system 100 on a mobile object 110, which is shown in figures 4 and 5. The mounting apparatus 20 is configured to mount the surroundings detection sensor 10 on a tug 120, which is also shown in figures 4 and 5. The sensor system 100 comprises a computing and control device 30. The sensor system 100 may moreover comprise a mobile terminal 40. The mobile terminal 40 may communicate with the surroundings detection sensor 10 and the computing and control device 30 wirelessly, or on a radio basis.

The surroundings detection sensor 10 and the mounting apparatus 20 may be arranged on a housing 24 in which the computing and control device 30 may be housed. Instead of the housing 24, the sensor system 100 may also comprise a frame (not shown) on or in which the surroundings detection sensor 10, the mounting apparatus 20 and the computing and control device 30 may be arranged. The housing 24 or the frame may have at least one handle 21 mounted on the housing 24 or the frame with which the sensor system 100 may be carried manually by an operator. The sensor system 100 is configured and dimensioned in such a way that the operator may carry the sensor system 100 by hand.

The surroundings detection sensor 10 may be arranged opposite the mounting apparatus 20, on opposite sides of the housing 24 or of the frame. The surroundings detection sensor 10 may be in the form of a three-dimensional laser scanner 12. The three-dimensional laser scanner 12 may comprise a three-dimensional detection region 14, which is shown schematically in figure 1. The detection region 14 may comprise a beam angle 16 that may define a spread of the detection region 14, which extends annularly, or toroidally, around the laser scanner 12. Within the beam angle 16, the detection region 14 may extend 360° around the laser scanner 12 in one dimension, for example laterally.

The computing and control device 30 comprises a position determination device 32 and a collision monitoring device 34. The computing and control device 30, the position determination device 32 and the collision monitoring device 34 are connected to the surroundings detection sensor 10. The position determination device 32 comprises a predetermined geometric model of an outer surface 112 of the mobile object 110. The position determination device 32 may read in a region of the outer surface 112 that is detected by the surroundings detection sensor 10. A position 11 of a tug-bound system 122, shown in figure 5, relative to the mobile object 110 is determined by the position determination device 32 and transmitted to the collision monitoring device 34. The tug- bound system 122 may be or comprise the surroundings detection sensor 10 or a movable component 115 of the mobile object 110. The collision monitoring device 34 may take the predetermined geometric model of the outer surface 112 and further objects 8 detected by the surroundings detection sensor 10 in the surroundings of the mobile object 110 as a basis for checking whether a collision between the mobile object 110 and one of the detected further objects 8 is impending.

The computing and control device 30 is connected to an antenna 31 to transmit a relative position of the monitored objects 8 in the surroundings of the mobile object 110, referenced to the mobile object 110 itself, to the mobile terminal 40. The mobile terminal 40 comprises a terminal antenna 41 for this purpose, in order to receive corresponding data. The mobile terminal 40 comprises a display 42 that may be used to visually display potential collision objects 8 to an operator. Based on the displayed potential collision objects 8, the operator may intervene in the operation of the mobile object 110 or in the operation of the potential collision objects 8. This may be taken as a basis for avoiding an impending collision.

The mounting apparatus 20 may comprise at least one suction cup 22, for example one or two suction cups 22, in which the sensor system 100, or the surroundings detection sensor 10, may be mounted on the tug 120. The mounting may be effected in a toolless and residue-free manner.

The sensor system 100 may moreover comprise a power supply 26, which may comprise a battery. The sensor system 100 may thus be in the form of an energy-autonomous system. The sensor system 100 may be controlled remotely using the mobile terminal 40 via a radio connection between the terminal antenna 41 and the antenna 31. This may involve detecting objects 8 in the surroundings of the sensor system 100 by the surroundings detection sensor 10, the position 11 determination by the position determination device 32 and the collision monitoring by the collision monitoring device 34 being controlled.

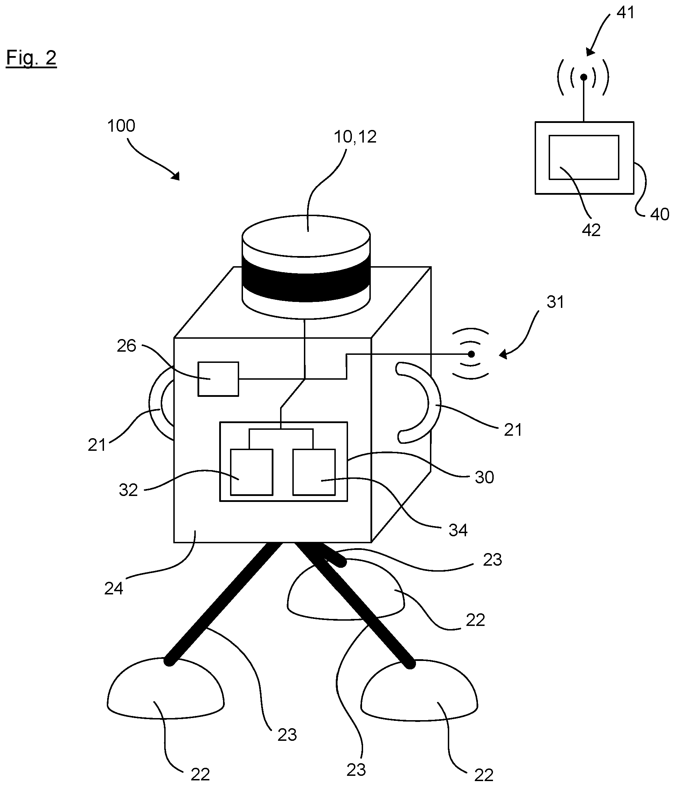

Figure 2 shows a further embodiment of the sensor system 100, which differs from the embodiment shown in figure in that there are provided at least three suction cups 22 for mounting the sensor system 100 on the tug 120. The three suction cups 22 may be arranged on the housing 24, or on the frame. Each of the suction cups 22 may be mounted on the housing 24, or on the frame, with at least one suction cup leg 23. The three suction cups 22 may be mounted with a tripod, which may comprise the three suction cup legs 23. The mounting of the sensor system 100 on the outer surface of the tug 120 may thus be provided more robustly and more independently of interfering influences, for example weather influences such as wind, on the outer surface of the tug 120.

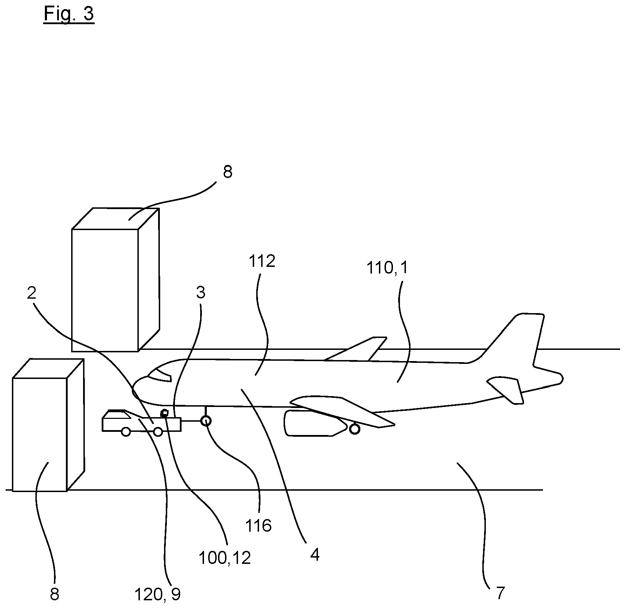

Figure 3 shows the tug 120, which may be an aircraft tug 9, and the mobile object 110, which may be an aircraft 1. The tug 120 comprises a tug body 2 on which the sensor system 100 is mounted. The sensor system 100 may comprise a three-dimensional laser scanner 12. The tug body 2 may comprise a mounting region 3. The mounting region 3 may be on top of the tug body 2 or on the rear of the tug body 2 The sensor system 100 may be mounted at any position on the outer surface of the mounting region 3. The arbitrary mountability of the sensor systems 100 may be based on respective mounting of the sensor system 100 using the at least one suction cup 22.

The geometric model of the outer surface 112 of the aircraft 1 may be or comprise a geometric model of a fuselage region 4 of the aircraft 1. The geometric model may be predetermined in an aircraft coordinate system 6, shown in figure 5. The sensor systems 100 may detect the outer surface 112 of the fuselage region 4 of the aircraft 1 in the detection region 14. A position 11 of the tug-bound system 122, is determined based on a geometric correlation of the geometric model with the detected outer surface 112 by the position determination device 32 of the sensor system 100 that is shown in figures 1 and 2. The geometric model, or the detected regions, may moreover include lower regions of at least one wing, of at least one engine or of at least one rudder of the aircraft 1.

Figure 3 further shows the aircraft 1 during towing over a taxiway 7 of an airport. The aircraft 1 is moved over the taxiway 7 by the aircraft tug 9. As shown schematically in figure 3, towing can take place using a towbar connected to a landing gear 116 of the aircraft 1. Alternatively, the aircraft tug 9 may also lift and accommodate the landing gear 116 and tow the aircraft 1. At least one of the sensor systems 100 may detect at least one object 8 on the taxiway 7 or beside the taxiway 7. In the embodiment shown, the object 8, which is shown only abstractly and schematically in figure 3, may for example be an infrastructure object or a building. The collision monitoring device 34 of the sensor systems 100 shown in figures 1 to 3 may monitor the relative position of at least one object 8 with respect to the aircraft 1, or the geometric model, and evaluate a relative change of position of the object 8. The monitored relative position, or change of position, may be displayed on the mobile terminal 40 shown in figures 1 and 2. An operator may monitor an impending collision between the aircraft 1 and the object 8.

Figur 4 further schematically shows the mobile object 110 which is the aircraft 1 according to an embodiment, and the tug 120 which is the aircraft tug 9 according to an embodiment. The mobile object 110 is bound to the tug 120 via the movable component 115 which is the landing gear 116 of the aircraft 1 according to an embodiment. The surroundings detection sensor 10 is mounted to the tug 120, wherein the tug-bound system 122 may comprise the surroundings detection sensor 10. The surroundings detection sensor 10 continuously detects a region of the outer surface 112 of the mobile object 110. The computing and control device 30 continuously determines a position of the surroundings detection sensor 10 based on a predetermined geometric model of the outer surface 112 of the mobile object 110 and the detected region of the outer surface 112. The position may correspond to the position 11 of the tug-bound system 122 relative to the mobile object 110. Alternatively or additionally to the position of the surroundings detection sensor 10, the computing and control device 30 continuously determines the position of the movable component 115 based on the predetermined geometric model of the outer surface 112 of the mobile object 110 and the detected region of the outer surface 112. The position may correspond to the position 11 of the tug-bound system 122 relative to the mobile object 110. The position 11 may comprise a relative angle which is a deflection angle 5 of the movable component 115. The deflection angle 5 may be a steering angle of the landing gear 116. The deflection angle 5 may correspond to an angle between a longitudinal object axis 111 of the mobile object 110 and a longitudinal tug axis 121 of the tug 120, which axes intersect at a pivot axis 117 of the movable component 115. The position 11 may be determined in the aircraft coordinate system 6. Further, also the object 8 may be detected om the aircraft coordinate system 6 during manoeuvring the mobile object 110 by the tug 120.

Figure 5 shows method steps S1 to S5c in a chronological sequence according to an embodiment. Method steps S1 to S5c are performed to detect objects 8 in the surroundings of the mobile object 110. The mobile object 110 may be the aircraft 1 shown in figures 3 and 4. The method steps S1 to S5c may be performed autonomously by the sensor system 100.

In a first step S1, the surroundings detection sensor 10 is provided on the tug 120. The surroundings detection sensor 10 may be permanently or temporarily mounted on or integrated in the tug body 2. The surroundings detection sensor 10 may be toollessly mounted on the tug body 2 via the at least one suction cup 22. In a further step S2, a region of the outer surface 112 of the mobile object 110 is continuously detected with the surroundings detection sensor 10. The outer surface 112 may be detected in the three-dimensional detection region 14 spanned by the surroundings detection sensor 10.

In a further step S3, the position 11 of the tug-bound system 122 relative to the mobile object 110 is continuously determined based on a predetermined geometric model of the outer surface 112 of the mobile object 110 and the detected region of the outer surface 112. The position 11 may be the position of the surroundings detection sensor 10 and/or the position of the movable component 115, both bound to the tug 120. The position 11 may be determined based on a geometric correlation between the geometric model and the region of the outer surface 112.

In a further step S4, objects 8 situated in the surroundings of the mobile object 110 are detected with the surroundings detection sensor 10 based on the continuously determined position 11 of the tug-bound system 122. The objects 110 may be detected relative to the mobile object 110 or its geometric model. Method steps S1 to S4 may be performed in a loop when the mobile object 110 is manoeuvred by the tug 120 for continuously detecting the region of the outer surface 112 of the mobile object 110, continuously determining and tracking the position 11 of the tug-bound system 122 relative to the mobile object 110 and continuously detecting the objects 8 in the surroundings of the mobile object 110.

In an optional further step S5a, the tug 120 is controlled for compensating for a movement of the movable component 115 relative to the mobile object 110 based on the detected position 11 of the movable component 115 when the mobile object 110 is manoeuvred by the tug 120. In an optional further step S5b, a warning signal for warning an operator of the tug 120 of a predefined critical movement of the movable component 115 is outputted based on the detected position of the movable component 115 when the mobile object 110 is manoeuvred by the tug 120.

In an optional further step S5c, the driving dynamics of the tug 120 are controlled based on the detected objects 8 in the surroundings of the mobile object 110. The driving dynamics may be controlled to avoid a potential collision with a detected object 8. In an optional further step, the objects 8 detected in the surroundings of the sensor system 100 by the surroundings detection sensor 10 are displayed on the mobile terminal 40. Based thereon, a collision between the mobile object 110 and the detected and displayed object 8 may be monitored.

### List of reference signs

- 1: aircraft
- 2: tug body
- 3: mounting region
- 4: fuselage region
- 5: deflection angle
- 6: aircraft coordinate system
- 7: taxiway
- 8: object
- 9: aircraft tug
- 10: surroundings detection sensor
- 11: position
- 12: three-dimensional laser scanner
- 14: detection region
- 16: beam angle
- 20: mounting apparatus
- 21: handle
- 22: suction cup
- 23: suction cup leg
- 24: housing
- 26: power supply
- 30: computing and control device
- 31: antenna
- 32: position determination device
- 34: collision monitoring device
- 40: mobile terminal
- 41: terminal antenna
- 42: display
- 100: sensor system
- 110: mobile object
- 111: longitudinal object axis
- 112: outer surface
- 115: movable component
- 116: landing gear
- 117: pivot axis
- 120: tug
- 121: longitudinal tug axis
- 122: tug-bound system
- S1: providing
- S2: continuously detecting
- S3: continuously determining
- S4: detecting objects
- S5a: controlling tug
- S5b: outputting warning signal
- S5c: controlling driving dynamics

## Claims

1. A method for detecting objects (8), comprising the steps of:
providing (S1) a surroundings detection sensor (10) on a tug (120), which is configured for manoeuvring a mobile object (110),
continuously detecting (S2) a region of an outer surface (112) of the mobile object (110) with the surroundings detection sensor (10),
continuously determining (S3) a position (11) of a tug-bound system (122) relative to the mobile object (110) based on a predetermined geometric model of the outer surface (112) of the mobile object (110) and the detected region of the outer surface (112),
wherein the steps of detecting (S2) and determining (S3) are performed when the mobile object (110) is manoeuvred by the tug (120), and
detecting (S4) objects (8) in the surroundings of the mobile object (110) with the surroundings detection sensor (10) based on the step of continuously determining (S3) the position (11) of the tug-bound system (122).

2. The method according to claim 1,
wherein in the step of continuously determining (S3) the position (11) of the tug-bound system (122), a position of the surroundings detection sensor (10) is continuously determined relative to the mobile object (110) based on the predetermined geometric model of the outer surface (112) and the region of the outer surface (112).

3. The method according to claim 1 or 2,
wherein in the step of continuously determining (S3) the position (11) of the tug-bound system (122), a position of a movable component (115) of the mobile object (110), which is bound to the tug (120) when the mobile object (110) is manoeuvred by the tug (120), is continuously determined relative to the mobile object (110) based on the predetermined geometric model of the outer surface (112) and the region of the outer surface (112).

4. The method according to claim 3,
the method comprising the further steps of:
controlling (S5a) the tug (120) for compensating for a movement of the movable component (115) relative to the mobile object (110) based on the detected position of the movable component (115) when the mobile object (110) is manoeuvred by the tug (120), and/or
outputting (S5b) a warning signal for warning an operator of the tug (120) of a predefined critical movement of the movable component (115) based on the detected position of the movable component (115) when the mobile object (110) is manoeuvred by the tug (120).

5. The method according to one of the preceding claims,
wherein the mobile object (110) is a transportation means for transporting people or goods, in particular an aircraft (1), and
wherein the steps of detecting (S2) and determining (S3) are performed during movement of the transportation means over the ground, in particular during rolling or reversing of the aircraft (1) on an airport.

6. The method according to one of the preceding claims,
comprising the further step of identifying whether an object (8) detected in the surroundings of the mobile object (110) is a potential collision object.

7. The method according to one of the preceding claims,
comprising the further step of controlling (S5c) the driving dynamics of the tug (120) based on the step of detecting (S4) objects (8) in the surroundings of the mobile object (110).

8. A sensor system (100) for detecting objects (8) in the surroundings of the sensor system (100) and for providing on a tug (120), which is configured for manoeuvring a mobile object (110),
the sensor system (100) comprises:
a surroundings detection sensor (10) for detecting the objects (8),
a mounting apparatus (20), connected to the surroundings detection sensor (10), for mounting the sensor system (100) on the tug (120), and
a position determination device (32) for continuously determining a position (11) of a tug-bound system (122), when the tug (120) is in a state in which the mobile object (110) is attached to the tug (120) and the surroundings detection sensor (10) is in a state in which it is mounted on the tug (120),
wherein the position determination device (32) is configured to continuously determine the position (11) of the tug-bound system (122) relative to the mobile object (110) based on a predetermined geometric model of an outer surface (112) of the mobile object (110) and a region of the outer surface (112) that is continuously detected by the surroundings detection sensor (10) for tracking the mobile object (110).

9. The sensor system (100) according to claim 8,
wherein the position (11) of the tug-bound system (122) comprises a position of the surroundings detection sensor (10), and
wherein the position determination device (32) is configured to continuously determine the position of the surroundings detection sensor (10) relative to the mobile object (110) based on the predetermined geometric model of the outer surface (112) and the region of the outer surface (112).

10. The sensor system (100) according to claim 8 or 9,
wherein the position (11) of the tug-bound system (122) comprises a position of a movable component (115) of the mobile object (110), which is bound to the tug (120) in the state in which the mobile object (110) is attached to the tug (120), and
wherein the position determination device (32) is configured to continuously determine the position of the movable component (115) relative to the mobile object (110) based on the predetermined geometric model of the outer surface (112) and the region of the outer surface (112).

11. The sensor system (100) according to one of claims 8 to 10,
wherein the mobile object (110) is a transportation means for transporting people or goods, in particular an aircraft (1),
wherein the tug (120) is configured for manoeuvring the transportation means, in particular being an aircraft tug (9), and
wherein the movable component (115) is a steering device of the transportation means, in particular a landing gear (116) of the aircraft (1).

12. The sensor system (100) according to one of claims 8 to 11,
wherein the surroundings detection sensor (10) comprises a laser scanner, in particular a three-dimensional laser scanner (12), for detecting objects (8) in the surroundings of the sensor system (100) in a planar manner.

13. The sensor system (100) according to one of claims 8 to 12,
further comprising a collision monitoring device (34) for monitoring objects (8) situated in the surroundings of the sensor system (100),
wherein the collision monitoring device (34) is configured to identify whether an object (8) monitored in the surroundings is a potential collision object.

14. The sensor system (100) according to claim 13,
wherein the collision monitoring device (34) is configured to control the driving dynamics of the tug (120) based on an identified potential collision object.

15. A tug (120), in particular an aircraft tug (9),
wherein the tug (120) comprises the sensor system (100) according to one of claims 8 to 14, which is configured to detect objects (8) in the surroundings of the sensor system (100).
